# EUROPÄISCHE PATENTSCHRIFT

(11) **EP 1 748 619 B1**
(45) Veröffentlichungstag und Bekanntmachung des Hinweises auf die Patenterteilung: **12.10.2011**
(21) Anmeldenummer: 06117195.5
(22) Anmeldetag: 14.07.2006
(51) Int. Cl.: H04L 29/06, H04L 12/22

(54) **Verfahren zum Aufbau einer direkten, netzübergreifenden und abhörsicheren Kommunikationsverbindung**
Method for creating a direct and secure communication connection between two networks
Méthode pour effectuer une connection de communications directe et sécurisée entre deux réseaux

(30) Priorität: 27.07.2005 DE 102005035698
(43) Veröffentlichungstag der Anmeldung: 31.01.2007
(73) Patentinhaber: Fujitsu Technology Solutions Intellectual Property GmbH, 80807 München (DE)
(72) Erfinder: Büschgen, Klaus, 85551 Kirchheim (DE)
(74) Vertreter: Rietzler, Alwin

(56) Entgegenhaltungen:
- WO-A2-03/036910
- US-A1- 2005 060 534

## Beschreibung

Zur Wartung von Kommunikationseinrichtungen innerhalb eines abgeschlossenen Kommunikationsnetzwerkes, beispielsweise eines Intranets sind Verfahren bekannt, bei denen eine abhörsichere Kommunikationsverbindung zwischen einer ersten außerhalb des zu betreuenden Kommunikationsnetzwerkes angeordneten Kommunikationseinrichtung und einer zweiten zu wartenden Kommunikationseinrichtung aufgebaut werden. Bei den zu betreuenden Kommunikationsnetzwerken handelt es sich vorzugsweise um private Kommunikationsnetzwerke, welche über Schutzmaßnahmen wie beispielsweise eine Firewall vor fremden und unberechtigten Verbindungsaufbauversuchen weiterer Kommunikationseinrichtung aus dem öffentlichen Kommunikationsnetzwerk, beispielsweise dem Internet geschützt sind.

Unter einer Firewall ist die Gesamtheit aller Maßnahmen zur Abschirmung eines lokalen bzw. privaten Kommunikationsnetzwerks gegen Zugriffe von außen zu verstehen, wobei diese überwiegend zur Überwachung des Datenverkehrs von einem öffentlichen in das zu überwachende private Kommunikationsnetzwerk eingesetzt werden. Derartige Firewalls können sowohl hardware- als auch softwaremäßig realisiert sein, je nach Anforderungen an die zu überwachenden Kommunikationsanwendungen bzw. Dienste oder an den Sicherheitsgrad. Insbesondere werden üblicherweise Sicherheitsmechanismen implementiert, die den direkten Aufbau einer Verbindung über eine Kommunikationsanwendung von außen in das private Kommunikationsnetzwerk verhindern.

Prinzipiell werden drei Realisierungsarten einer Firewall unterschieden: die "Paketfilterung", das "Circuit Relay" und das "Application-Gateway" bzw. "Application-Level-Gateway". Diese können auch als kombinierte Sicherungskonzepte realisiert sein.

Bei der Datenpaketfilterung werden die in das Kommunikationsnetzwerk ein- und ausgehenden Datenpakte auf der jeweiligen Schichtebene, d.h. beispielsweise der Sicherungsschicht, der Netzwerkschicht oder der Transportschicht anhand von vorgegebenen Tabellen analysiert und kontrolliert. Hierbei wird über ein Filtermodul der Datenpaketinhalt interpretiert und verifiziert, und zwar werden die Header der Datenpakete auf Ihre Regelkonformität bzgl. der vorgegebenen Kommunikationssteuerungsschicht überprüft.

Das Circuit-Relay-Konzept ("Kreis-Relais-Konzept") besteht aus einem Subnetz, einer netzinternen und einer netzexternen Routereinheit sowie einer Host-Kommunikationsanwendung als Verbindungspartner. Über die Host-Kommunikationsanwendung wird die Datenkommunikation durchgeführt, wodurch eine Transparenz des Netzaufbaus nach außen vermieden wird. Zum Aufbau einer Datenverbindung von einem außerhalb des privaten Kommunikationsnetzes befindlichen Kommunikationseinheit, beispielsweise eines Computersystems ist eine Anmeldung bei der Host-Kommunikationsanwendung erforderlich, die eine Zugangsberechtigung erfordert. Eine Überwachung des nach erfolgtem Verbindungsaufbau fließenden Datenpaketstromes findet nicht statt.

Die sicherste, jedoch auch technisch aufwendigste Realisierungsform einer Firewall stellt das Application-Level-Gateway-Konzept dar. Hierbei werden das private und das weitere, beispielsweise öffentliche Kommunikationsnetzwerk logisch und physikalisch voneinander entkoppelt. Zum Zugriff auf das private Kommunikationsnetzwerk ist eine Identifikation und Authentifizierung erforderlich. Die ankommenden Datenpakete einer Kommunikationsverbindung werden in einer Proxy-Server-Einheit empfangen und über eine Proxy-Kommunikationsanwendung in das private Kommunikationsnetzwerk übertragen. Somit besteht keine direkte Verbindung zwischen der ersten außerhalb des privaten Kommunikationsnetzwerks befindlichen Kommunikationseinrichtung und der zweiten innerhalb des privaten Kommunikationsnetzwerks befindlichen Kommunikationseinrichtung. Abhängig von der jeweils zu überwachenden Kommunikationsanwendung können in der Proxy-Server-Einheit unterschiedliche dienstespezifische Gateways vorgesehen sein, beispielsweise für Telnet, E-Mail, http etc..

Um über eine in einem ersten privaten Kommunikationsnetzwerk angeordnete erste Kommunikationseinrichtung, beispielsweise eines Servicedienstleisters eine zweite, in einem zweiten privaten Kommunikationsnetzwerk angeordnete Kommunikationseinrichtung, beispielsweise eines Kunden warten zu können, ist jedoch eine direkte netzübergreifende Kommunikationsverbindung zwischen dem ersten und zweiten privaten Kommunikationsnetzwerk erforderlich. Hierbei erfolgt der Verbindungsaufbau überlicherweise über ein öffentliches Kommunikationsnetz, beispielsweise das Internet. Aus Sicherheitsgründen ist der Aufbau einer derartigen direkten und netzübergreifenden Kommunikationsverbindung, vorzugsweise über das öffentliche Kommunikationsnetzwerk mit den herkömmlichen Firewall-Konzepten nur schwer vereinbar.

Zum Aufbau von abhörsicheren Kommunikationsverbindungen ist das "Secure Shell" (SSH)-Netzwerkprotokoll bekannt, bei dem Daten zwischen einer ersten Kommunikationseinrichtung und einer zweiten Kommunikationseinrichtung in verschlüsselter Form übertragen werden. Zur Realisierung der Abhörsicherheit eines bestehenden Übertragungsprotokolls wie beispielsweise Telnet, FTP ("File Transfer Protokoll") oder POP3 ("post office protocol") wird über ein derartiges "Secure Shell" Netzwerkprotokoll eine Secure-Shell-Tunnelverbindung aufgebaut, über die Daten gemäß dem verwendeten Übertragungsprotokoll "getunnelt" und somit abhörsicher übertragen werden können.

WO03/036910 offenbart ein Verfahren zum Aufbau einer sicheren Kommunikationsverbindung zwischen einer ersten Kommunikationseinrichtung eines ersten Kommunikationsnetzwerks und einer zweiten Kommunikationseinrichtung eines zweiten Kommunikationsnetzwerks.

Die Aufgabe der vorliegenden Erfindung ist darin zu sehen, ein flexibles und sicheres Verfahren anzugeben, durch das der Aufbau einer direkten, netzübergreifenden und abhörsicheren Kommunikationsverbindung zwischen einer ersten Kommunikationseinrichtung eines ersten Kommunikationsnetzwerks und einer zweiten Kommunikationseinrichtung eines zweiten, topologisch vollständig vom ersten Kommunikationsnetzwerk getrennten Kommunikationsnetzwerks unter Beibehaltung der strengen Sicherheitsvorschriften innerhalb des zweiten Kommunikationseinrichtung ermöglicht.

Erfindungsgemäß wird die Aufgabe durch ein Verfahren mit den in Anspruch 1 angegebenen Merkmalen gelöst. Vorteilhafte Weiterbildungen der vorliegenden Erfindung sind den abhängigen Ansprüchen zu entnehmen.

Der wesentliche Aspekt des erfindungsgemäßen Verfahrens zum Aufbau einer direkten, netzübergreifenden und abhörsicheren Kommunikationsverbindung zwischen einer ersten Kommunikationseinrichtung eines ersten Kommunikationsnetzwerks und zumindest einer zweiten Kommunikationseinrichtung eines weiteren zweiten Kommunikationsnetzwerks über zumindest eine erste mit dem ersten Kommunikationsnetzwerk verbundene Vermittlungseinheit, einer zweiten mit zumindest einem der weiteren zweiten Kommunikationsnetzwerke verbundenen Vermittlungseinheit und einer im zweiten Kommunikationsnetzwerk vorgesehen und mit der zumindest einen zweiten Kommunikationseinrichtung verbindbaren netzinternen Vermittlungseinheit, ist darin zu sehen, dass vor dem Aufbau der Kommunikationsverbindung von der netzinternen Vermittlungseinheit aus dem zweiten Kommunikationsnetzwerk eine Secure-Shell-Tunnel-Verbindung zur zweiten Vermittlungseinheit aufgebaut wird, und ausgehend von der ersten Kommunikationseinrichtung über die erste und zweite Vermittlungseinheit, die Secure-Shell-Tunnel-Verbindung und die netzinterne Vermittlungseinheit zur zweiten Kommunikationseinrichtung eine direkte, netzübergreifende und abhörsichere Kommunikationsverbindung aufgebaut wird. Zur Beibehaltung der innerhalb des zu wartenden zweiten Kommunikationsnetzwerks vorliegenden Sicherheitsmechanismen wird vor dem Aufbau der direkten und netzübergreifenden Kommunikationsverbindung eine abhörsichere Verbindung in Form einer Secure-Shell-Tunnel-Verbindung von der netzinternen Vermittlungseinheit zur zweiten Vermittlungsstelle bzw. Application-Level-Firewall-Einheit aufgebaut und somit die "Kunden-Firewall" durchtunnelt. Hierzu wird durch den Kunden über eine bootfähige Secure-Shell-Client-Anwendung sowie beispielsweise auf einer Diskette gespeicherten Konfigurationsdaten zunächst ein abhörsicherer Secure-Shell-Tunnel von einer als netzinterne Vermittlungseinheit im zweiten Kommunikationsnetzwerk konfigurierten Kommunikationseinrichtung zur zweiten Application-Level-Firewall-Einheit aufgebaut. Durch den Servicedienstleister wird anschließend beispielsweise unter Verwendung eines symbolischen Adressindikators eine direkte, netzübergreifende und abhörsichere Kommunikationsverbindung auf Applikationsebene zwischen Clientrechner und Servicerechner ohne Modifikationen der Sicherheitseinstellungen im zweiten Kommunikationsnetzwerk über die Secure-Shell-Tunnel-Verbindung erstellt, wobei die Client-Kommunikationseinrichtung und die Server-Kommunikationseinrichtung in topologisch getrennten Kommunikationsnetzwerken beispielsweise Firmenintranets angeordnet sind. Hierbei bildet der symbolische Adressindikator beispielhaft eine Art "Verbindungsticket", welches sämtliche für den Aufbau der direkten, netzübergreifenden und abhörsicheren Kommunikationsverbindung erforderlichen Daten enthält. Durch den Aufbau einer derartigen Secure-Shell-Tunnel-Verbindung vom zweiten Kommunikationsnetzwerk nach außen wird besonders vorteilhaft der Administrationsaufwand der Firewall des zweiten Kommunikationsnetzwerkes gering gehalten, da lediglich die Secure-Shell-Tunnel-Verbindung von der netzinternen zur zweiten Vermittlungseinheit aufgebaut und überwacht werden muss. Weiterhin vorteilhaft wird die Secure-Shell-Tunnel-Verbindung nur bei Bedarf aufgebaut. Der Betreiber des zu wartenden Kommunikationsnetzwerks entscheidet somit wann ein Zugriff auf das zweite Kommunikationsnetzwerk möglich sein soll.

Die vorliegende Erfindung wird nachfolgend an einem Ausführungsbeispiel anhand der Figuren näher erläutert.

Es zeigen:
- Fig. 1: beispielhaft in einem schematischen Blockschaltbild ein aus mehreren Kommunikationsnetzwerken bestehendes Kommunikationssystem,
- Fig. 2: beispielhaft eine zwischen der zweiten Vermittlungseinheit und einer als netzinterne Vermittlungseinheit konfigurierte Kommunikationseinrichtung bestehende Secure-Shell-Tunnel-Verbindung;
- Fig. 3: beispielhaft in einem Ablaufdiagrammes die einzelne Schritte einer symbolischen Adressierung und
- Fig. 4: beispielhaft in einer vereinfachten Darstellung den Aufbau eines symbolischen Adressindikators.

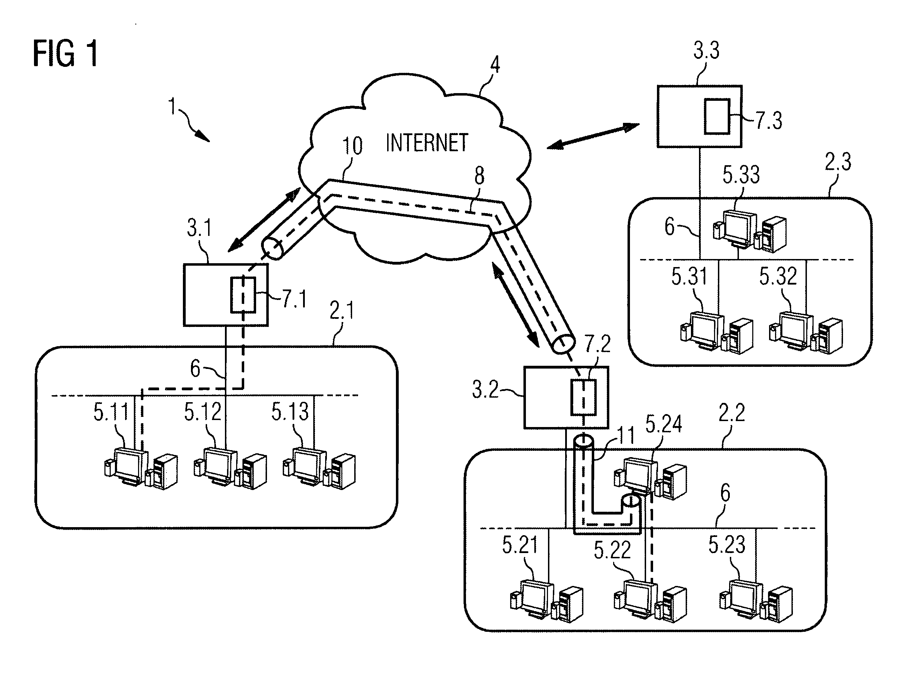

In Fig. 1 ist in einem schematischen Blockschaltbild ein Kommunikationssystem 1 dargestellt, bei dem mehrere private Kommunikationsnetzwerke 2, beispielsweise ein erstes, zweites und drittes Kommunikationsnetzwerk 2.1, 2.2, 2.3 über jeweils zumindest eine Vermittlungsstelle, beispielsweise eine erste, zweite und dritte Vermittlungseinheit 3.1, 3.2, 3.3 an ein öffentliches Kommunikationsnetzwerk 4, vorzugsweise das Internet angeschlossen sind. Hierbei sind die Anzahl, der Aufbau und die Anordnung der privaten Kommunikationsnetzwerke 2 bzgl. des öffentlichen Kommunikationsnetzwerks 4 beispielhaft gewählt und können beliebig variiert werden.

Das erste Kommunikationsnetzwerk 2.1 stellt beispielsweise das Intranet eines Servicedienstleisters dar, der mit der Wartung beispielsweise des zweiten und/oder dritten - vom ersten Kommunikationsnetzwerk 2.1 vollständig topologisch getrennten - Kommunikationsnetzwerkes 2.2, 2.3 beauftragt ist. Zur Wartungszwecken ist der Aufbau einer direkten, netzübergreifenden und abhörsicheren Kommunikationsverbindung 8 zwischen dem ersten Kommunikationsnetzwerk 2.1 über das öffentliche Kommunikationsnetzwerk 4 zum zu wartenden zweiten oder dritten Kommunikationsnetzwerk 2.2, 2.3 erforderlich. Das zweite und dritte Kommunikationsnetzwerk 2.2, 2.3 sind beispielsweise ebenfalls als Intranets ausgebildet, welche in sich geschlossene eigenständige, d.h. topologisch eigenständige Kommunikationsnetzwerke 2 darstellen.

Das erste bis dritte Kommunikationsnetzwerk 2.1 - 2.3 weisen jeweils eine Vielzahl von vernetzten Kommunikationseinrichtungen 5.x auf, welche beispielsweise als Rechnersysteme bzw.

Computereinheiten ausgebildet sein können. Die Kommunikationseinrichtungen 5 weisen Kommunikationsports (in den Figuren nicht dargestellt) auf, über die die jeweils auf den Kommunikationseinrichtungen 5 ausgeführten Kommunikationsanwendungen kommunizieren. Hierbei ist unter einem Kommunikationsport jeweils ein über eine eindeutige Kommunikationsportnummer Px identifizierter Kommunikationskanal zu verstehen, wobei in an sich bekannter Weise einzelne Kommunikationsportnummern Px für vorgegebene Kommunikationsanwendungen reserviert sind.

Bei dem in Figur 1 dargestellten Ausführungsbeispiel sind im ersten Kommunikationsnetzwerk 2.1 eine erste, zweite und dritte Kommunikationseinrichtung 5.11, 5.12, 5.13 vorgesehen. Das zweite Kommunikationsnetzwerk 2.2 umfasst beispielhaft eine erste bis vierte Kommunikationseinrichtung 5.21, 5.22, 5.23, 5.24, wobei das dritte Kommunikationsnetzwerk 2.3 eine erste bis dritte Kommunikationseinrichtung 5.31, 5.32, 5.33 aufweist. Die einzelnen dargestellten Kommunikationseinrichtungen 5.11 - 5.13, 5.21 - 5.24, 5.31 - 5.33 eines Kommunikationsnetzwerks 2.1, 2.2, 2.3 sind jeweils über Verbindungsleitungen 6 innerhalb des jeweiligen privaten Kommunikationsnetzwerks 2.1, 2.2, 2.3 miteinander vernetzt.

Ferner ist an das erste Kommunikationsnetzwerk 2.1 die erste Vermittlungseinheit 3.1 angeschlossen, welche eine Verbindung von dem ersten Kommunikationsnetzwerk 2.1 zum öffentlichen Kommunikationsnetzwerk 4 herstellt. Analog hierzu sind zur Verbindung des zweiten und dritten Kommunikationsnetzwerkes 2.2, 2.3 mit dem öffentlichen Kommunikationsnetzwerk 4 ebenfalls die zweite und dritte Vermittlungseinheit 3.2, 3.3 vorgesehen. Hierbei sind vorzugsweise die Verbindungsleitungen 6 des jeweiligen Kommunikationsnetzwerks 2.1 bis 2.3 jeweils an die vorgeschaltete Vermittlungseinheit 3.1 bis 3.3 geführt, so dass zwischen den einzelnen Kommunikationseinrichtungen 5.11 - 5.13, 5.21 bis 5.23, 5.31 - 5.33 und der zugehörigen Vermittlungseinheit 3.1 bis 3.3 eine direkte Verbindung, beispielsweise über eine in den Figuren nicht dargestellte Routereinheit besteht. Zusätzlich können auch zwischen der zweiten bzw. dritten Vermittlungseinheit 3.2, 3.3 und dem mit diesem verbundenen zweiten bzw. dritten Kommunikationsnetzwerk 2.2, 2.3 so genannte "Entmilitarisierte Zonen" vorgesehen sein.

Die erste bis dritte Vermittlungseinheit 3.1 bis 3.3 ist beispielhaft jeweils als Application-Level-Firewall-Einheit (ALF) ausgebildet, vorzugsweise als erste, zweite und dritte ALF-Einheit 3.1, 3.2, 3.3. Die erste ALF-Einheit 3.1 weist eine erste Proxy-Server-Einheit 7.1, die zweite ALF-Einheit 3.2 eine zweite Proxy-Server-Einheit 7.2 und die dritte ALF-Einheit 3.2 eine dritte Proxy-Server-Einheit 7.3 auf, über die die Proxy-Funktionalitäten der ersten bis dritten ALF-Einheiten 3.1, 3.2, 3.3 implementiert werden. Über die Proxy-Server-Einheiten 7.1 - 7.3 erfolgt somit eine logische und physikalische Entkopplung auf Internet-Protokoll-(IP)-Ebene des jeweiligen privaten Kommunikationsnetzwerks 2.1 bis 2.3 von dem öffentlichen Kommunikationsnetzwerk 4.

Beim Aufbau einer Kommunikationsverbindung 8 von einem privaten Kommunikationsnetzwerk 2 in das öffentliche Kommunikationsnetzwerk bzw. ins Internet 4 wird über die vorgeschaltete erste Proxy-Server-Einheit 7.1 eine automatische Adressübersetzung durchgeführt. Die Proxy-Server-Einheiten 7.1 bis 7.3 schicken hierbei die aus dem jeweiligen privaten Kommunikationsnetzwerk 2.1 bis 2.3 erhaltenen Verbindungsanfragen unter der jeweils eigenen Adresse mit zugehöriger Kommunikationsportnummer Px an das öffentliche Kommunikationsnetzwerk 4 und leiten analog hierzu die vom öffentlichen Kommunikationsnetzwerk 4 erhaltenen Verbindungsanfragen an die entsprechende Kommunikationseinrichtung 5 des privaten Kommunikationsnetzwerk 2.1 bis 2.3 weiter.

Die Berechtigung zum Zugriff von außerhalb des jeweiligen privaten Kommunikationsnetzwerks 2.2 auf Kommunikationseinheiten 5.22 innerhalb des jeweiligen privaten Kommunikationsnetzwerks 2.2 erfolgt somit ausschließlich über die erste bis dritte Proxy-Server-Einheiten 7.1 bis 7.3, die alle Anfragen sammelt und somit den Aufbau einer direkten Kommunikationsverbindung 8 zwischen den die Kommunikationsverbindung 8 initiierenden ersten außerhalb des zu schützenden Kommunikationsnetzwerks 2.2 befindlichen Kommunikationseinrichtung 5.11 und einer zweiten im zu schützenden Kommunikationsnetzwerk 2.2 befindlichen Kommunikationseinrichtung 5.22 verhindert. Die eigentliche Struktur sowie die netzinternen Adressnummern, beispielsweise die Internet-Protokoll-Adressen sowie die Kommunikationsportadressen der jeweiligen Kommunikationseinrichtung innerhalb des geschützten privaten Kommunikationsnetzwerks 2.2 sind somit von außen nicht ersichtlich und somit auch von einer außerhalb des privaten Kommunikationsnetzwerks 2.2 befindlichen Kommunikationseinrichtung 5.11 nicht direkt ansprechbar.

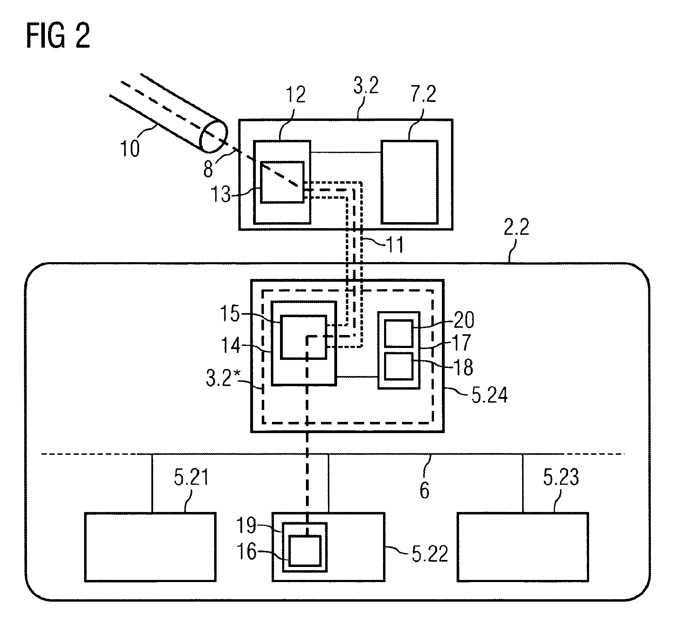

In Fig. 2 ist in einer schematischen Ausschnittsdarstellung beispielhaft das zweite Kommunikationsnetzwerk 2.2 mit angeschlossener zweiter ALF-Einheit 3.2 dargestellt. In der zweiten ALF-Einheit 3.2 ist eine erste Steuereinheit 12 mit einer "Secure Shell" (SSH)-Server-Anwendung 13 vorgesehen. Die Steuereinheit 12 ist mit der zweiten Proxy-Server-Einheit 7.2 verbunden.

Die vierte Kommunikationseinrichtung 5.24 des zweiten Kommunikationsnetzwerk 2.2 ist beispielhaft als netzinterne Vermittlungsstelle 3.2* konfiguriert, welche eine zweite Steuereinheit 14 mit einer "Secure Shell" (SSH)-Client-Anwendung 15 aufweist. Die zweite Steuereinheit 14 ist mit einem Speichermedium 17, vorzugsweise einem wechselbaren Speichermedium beispielsweise einer CD-, DVD- oder Disketteneinheit verbunden, in der die zum Aufbau einer Secure-Shell-Tunnel-Verbindung 11 erforderlichen Vermittlungsdaten 18 (IP-Adressen, Kommunikationsportsnummern, Gateways) gespeichert sind.

In der zu wartenden zweiten Kommunikationseinrichtung 5.22 ist eine dritte Steuereinheit 19 vorgesehen, auf der eine Kommunikationsanwendung 16 ausgeführt wird und die beispielhaft mit der in der zweiten Steuereinheit 14 ausgeführten SSH-Client-Anwendung 15 zusammenwirkt.

Zum Aufbau einer Secure-Shell-Tunnel-Verbindung 11 wird die vierte Kommunikationseinrichtung 5.24 mit Hilfe eines Neustarts mit einer bootfähigen SSH-Client-Anwendung 15 als netzinterne Vermittlungseinheit 3.2* initialisiert. Durch die SSH-Client-Anwendung 15 werden die in dem Speichermedium 17 gespeicherten und zum Aufbau der Secure-Shell-Tunnelverbindung 11 erforderlichen Vermittlungsdaten 18 in die zweite Steuereinheit 14 geladen. Vorzugsweise ist die bootfähige SSH-Client-Anwendung 15 auf einer CD gespeichert und wird beim Booten der vierten Kommunikationseinrichtung 5.24 in die zweite Steuereinheit 14 geladen, wobei die Konfigurationsdaten 18 beispielsweise auf einer Diskette gespeichert sind. Die Vermittlungsdaten 18 werden beispielsweise von der SSH-Client-Anwendung 15 von der Diskette gelesen.

Die Vermittlungsdaten 18 umfassen beispielsweise die der Secure-Shell-Server-Anwendung 13 zugeordnete erste Secure-Shell-Kommunikationsportnummer SP1, die eindeutige netzinterne Kommunikationsportnummer Px*, die eindeutige netzinterne Vermittlungsadressnummer Vx* der zweiten Vermittlungseinheit 3.2 und die der Secure-Shell-Client-Anwendung 15 zugeordnete zweite Secure-Shell-Kommunikationsportnummer SP2 der vierten Kommunikationseinrichtung 5.24.

Über die eindeutige netzinterne Vermittlungsadressnummer Vx* der zweiten Vermittlungseinheit 3.2 sowie die erste Secure-Shell-Kommunikationsportnummer SP1 wird über die SSH-Client-Anwendung 15 eine Verbindung zur SSH-Server-Anwendung 13 aufgebaut. Zwischen der SSH-Client-Anwendung 15 und der SSH-Server-Anwendung 13 werden in an sich bekannter Weise die zum Aufbau der abhörsicheren Secure-Shell-Tunnelverbindung 11 erforderlichen Parameter ausgetauscht und anschließend die Secure-Shell-Tunnelverbindung 11 aufgebaut, aufrecht erhalten und gegebenenfalls wieder abgebaut.

Nach dem erfolgreichen Aufbau Secure-Shell-Tunnelverbindung 11 werden über diese sämtliche für den Verbindungsaufbau zu den zweiten Kommunikationseinrichtung 5.22 erforderlichen Verbindungsdaten 20 von der zweiten Vermittlungsstelle 3.2 an die netzinterne Vermittlungsstelle 3.2* übertragen und in der Speichereinheit 17 gespeichert. Hierbei weist eine Secure-Shell-Tunnel-Verbindung 11 mehrere Übertragungskanäle auf. Anhand der Verbindungsdaten 20 wird jeder einzelnen Kommunikationseinrichtung 5.21 bis 5.24 des zweiten Kommunikationsnetzwerks 2.2 zumindest ein Übertragungskanal der Secure-Shell-Tunnel-Verbindung 11 zugeordnet.

Bei den nachfolgenden Ausführungen wird von dem Bestehen eine Secure-Shell-Tunnel-Verbindung 11 zwischen der ersten Steuereinheit 12 der zweiten ALF-Einheit 3.2 und der zweiten Steuereinheit 14 der vierten Kommunikationseinrichtung 5.24 ausgegangen, welche Voraussetzung für den Aufbau der direkten, netzübergreifenden und abhörsicheren Kommunikationsverbindung 8 ist.

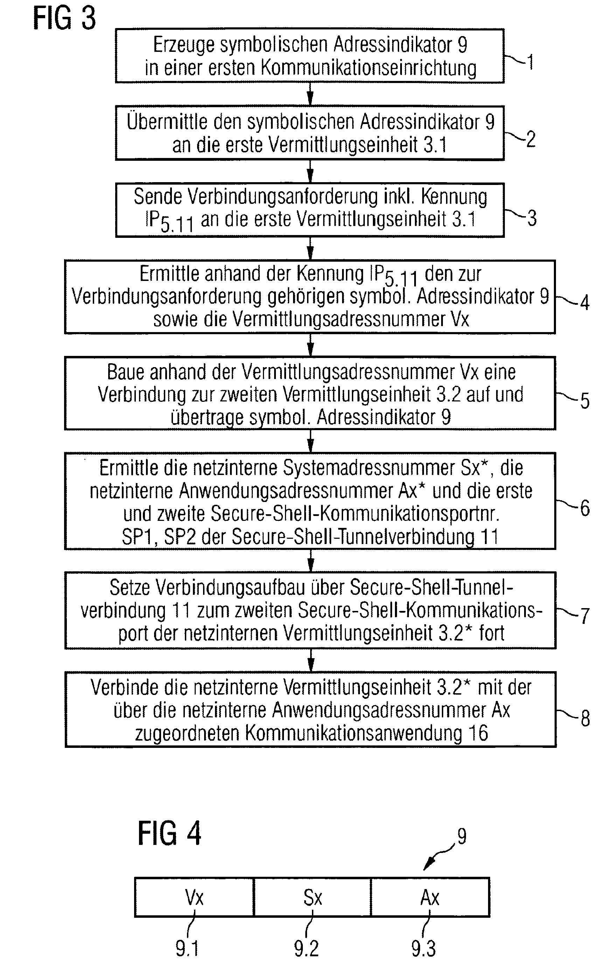

In Figur 3 sind anhand eines schematischen Ablaufdiagrammes die weiteren Schritte des folgenden Verbindungsaufbaus erläutert. Zum Aufbau einer derartigen direkten, netzübergreifenden und abhörsicheren Kommunikationsverbindung 8 ist es erforderlich, die zu wartende Kommunikationseinrichtung 5.x des jeweiligen privaten Kommunikationsnetzwerks 2.2, 2.3 bzw. einer auf dieser ausgeführten Kommunikationsanwendung von außen über die Secure-Shell-Tunnelverbindung 11 direkt anzusprechen.

Hierzu werden zunächst sämtliche zu wartenden Kommunikationseinrichtungen 5.21 - 5.24, 5.31 - 5.33 der zu betreuenden Kommunikationsnetzwerke 2.2, 2.3 sowie wie den auf den Kommunikationseinrichtungen 5.21 - 5.24, 5.31 - 5.33 vorgesehenen Kommunikationsanwendungen eindeutige symbolische Adressnummern Vx, Sx, Ax zugeordnet und in den genannten Netzwerkeinrichtungen beispielsweise in Form von Datensätzen gespeichert, wobei die Datensätze in ein oder mehreren in den genannten Netzwerkeinrichtungen vorgesehenen Speichereinheiten (in den Figuren nicht dargestellt) bzw. Speichermedien 17 abgelegt sein können.

In einem ersten Schritt wird beispielsweise in der ersten Kommunikationseinrichtung 5.11 des ersten Kommunikationsnetzwerks 3.1 (Intranet des Servicedienstleisters) ein symbolischer Adressindikator 9 erzeugt. Der Aufbau eines derartigen symbolischen Adressindikators 9 ist in Figur 4 schematisch dargestellt. Der symbolische Adressindikator 9 weist beispielhaft eine erste bis dritte symbolische Adresskomponente 9.1 bis 9.3 auf, wobei die erste symbolische Adresskomponente 9.1 die der Vermittlungsstelle bzw. der ALF-Einheit 3.2, 3.3 zugeordnete symbolische Vermittlungsadressnummer Vx, die zweite symbolische Adresskomponente 9.2 die der jeweiligen Kommunikationseinrichtung 5 zugeordnete symbolische Systemadressnummer Sx und die dritte symbolische Adresskomponente 9.3 die der jeweiligen Kommunikationsanwendung in der zweiten oder dritten Kommunikationseinrichtung 2.2, 2.3 zugeordnete symbolische Anwendungsadressnummer Ax umfasst. Durch die Kombination einer symbolischen Vermittlungsadressnummer Vx, einer symbolischen Systemadressnummer Sx und einer symbolischen Anwendungsadressnummer Ax ergibt sich ein bezüglich des ersten Kommunikationsnetzwerkes 2.1 eindeutiger symbolischer Adressindikator 9, der die zum Aufbau der direkten netzübergreifenden Kommunikationsverbindung 8 erforderlichen Verbindungsressourcen angibt. Die symbolische Vermittlungsadressnummer Vx kann beispielsweise die Internet-Protokoll-Adresse der zweiten oder dritten ALF-Einheit 3.2, 3.3 sein.

Die in Figur 4 dargestellten ersten bis dritten Adresskomponenten 9.1 bis 9.3 sind beispielhaft gewählt und können durch geeignete weitere Komponenten ergänzt bzw. in unterschiedlicher Reihenfolge zueinander angeordnet werden. Beispielsweise können optional weitere Informationen wie der Name, die E-mailadresse oder die Kennung des Servicemitarbeiters über den symbolischen Adressindikator 9 mit übermittelt werden.

Der in der ersten Kommunikationseinrichtung 5.11 des ersten Kommunikationsnetzwerks 2.1 erzeugte symbolische Adressindikator 9 wird über die Verbindungsleitungen 6 des ersten Kommunikationsnetzwerk 1 an die erste Vermittlungsstelle 3.1, d.h. an die Proxy-Server-Einheit 7.1 der ersten ALF-Einheit 3.1 übermittelt und in dieser abgespeichert. Dies entspricht dem zweiten Schritt des in Fig. 3 dargestellten Ablaufdiagrammes.

Zusätzlich zu dem an die erste ALF-Einheit 3.1 übermittelten symbolischen Adressindikator 9 wird in der ersten ALF-Einheit 3.1 eine die erste Kommunikationseinrichtung 5.11 kennzeichnende Kennung, vorzugsweise deren Internet-Protokoll-Adresse IP_{5.11} hinterlegt, so dass in der ersten ALF-Einheit 3.1 eine Verknüpfung zwischen dem hinterlegten symbolischen Adressindikator 9 und der den Ausgangspunkt der durch den symbolischen Adressindikator 9 beschriebenen Kommunikationsverbindung 8 bildenden ersten Kommunikationseinrichtung 5.11 besteht.

In einem dritten Schritt wird zum Aufbau der direkten netzübergreifenden Kommunikationsverbindung 8 über eine in der ersten Kommunikationseinrichtung 5.11 vorgesehenen Kommunikationsanwendung, beispielsweise eine "Telnet-Client-Anwendung" oder eine "PC-Anywhere-Client-Anwendung" eine Verbindungsanforderung initiiert, d.h. von der ersten Kommunikationseinrichtung 5.11 an die erste ALF-Einheit 3.1 übermittelt.

Die Verbindungsanforderung weist zumindest die die erste Kommunikationseinrichtung 5.11 und/oder die Kommunikationsanwendung identifizierende Kennung IP_{5.11}, vorzugsweise die Internet-Protokoll-Adresse der ersten Kommunikationseinrichtung 5.11 und/oder den der genannten Kommunikationsanwendung zugeordnete Kommunikationsportnummer auf. Anhand der mit der Verbindungsanforderung übermittelten Kennung IP_{5.11} wird in der ersten Proxy-Server-Einheit 7.1 der zugehörige symbolische Adressindikator 9 ermittelt, der die für den weiteren Verbindungsaufbau erforderlichen symbolischen Adressnummern Vx, Sx, Ax enthält (vierter Schritt).

Durch die erste Proxy-Server-Einheit 7.1 wird anschließend der Inhalt der ersten symbolischen Adresskomponente 9.1, d.h. die symbolische Vermittlungsadressnummer Vx der zweiten ALF-Einheit 3.2 bestimmt und anhand der ermittelten symbolischen Vermittlungsadressnummer Vx eine Verbindung zu der zugehörigen zweiten ALF-Einheit 3.2 über das öffentliche Kommunikationsnetzwerk 4 aufgebaut.

In einer bevorzugten Ausführungsform wird beispielsweise von der ersten ALF-Einheit 3.1 durch das öffentliche Kommunikationsnetzwerk bzw. das Internet 4 zur zweiten ALF-Einheit 3.2 eine Virtual-Private-Network (VPN) Tunnelverbindung 10 vorgesehen, die eine abhörsichere Datenkommunikation über das Internet 4 gewährleistet. Die VPN-Tunnelverbindung 10 zwischen der ersten und zweiten ALF-Einheit 3.1, 3.2 bildet ein weiteres topologisch vom ersten bis dritten Kommunikationsnetzwerk 2.1, 2.2, 2.3 eigenständiges Kommunikationsnetzwerk aus.

In einem fünften Schritt wird neben dem Aufbau der Verbindung zur zweiten Vermittlungsstelle 3.2 bzw. zur zweiten ALF-Einheit 3.2 der symbolische Adressindikator 9 zumindest teilweise an die zweite Proxy-Server-Einheit 7.2 der ermittelten zweiten ALF-Einheit 3.2 übertragen und dort gespeichert.

In der zweiten Proxy-Server-Einheit 7.2 wird in einem sechsten Schritt anhand der in der zweiten symbolischen Adresskomponente 9.2 des übermittelten symbolischen Adressindikators 9 enthaltenen symbolischen Systemadressnummer Sx die bezüglich des zweiten Kommunikationsnetzwerkes 2.2 eindeutige netzinterne Systemadressnummer Sx* der zweiten Kommunikationseinrichtung 5.22 ermittelt. Hierzu wird symbolische Systemadressnummer Sx mit den in der zweiten Vermittlungseinheit 3.2 hinterlegten Speichereinträgen verglichen.

Über die in der zweiten Vermittlungseinheit 3.2 hinterlegten symbolische Systemadressnummer Sx und deren Verknüpfung mit der bezüglich des zweiten Kommunikationsnetzwerkes 2.2 eindeutigen netzinternen Systemadressnummer Sx* ist eine eindeutige Bestimmung der anzusprechenden zweiten Kommunikationseinrichtung 5.22 bzw. des zu wartenden Computersystems 5.22 in dem zweiten Kommunikationsnetzwerk 2.2 für den weiteren Verbindungsaufbau möglich. Hierbei kann beispielsweise als netzinterne Systemadressnummer Sx* die Internet-Protokoll-Adresse IP_{5.22} der zweiten Kommunikationseinrichtung 5.22 innerhalb des zweiten Kommunikationsnetzwerks 2.3 verwendet werden.

Ausgehend von der ermittelten Systemadressnummer Sx* wird über die zweite Proxy-Server-Einheit 7.2 die zugeordnete symbolische Anwendungsadressnummer Ax ermittelt und diese mit den Speichereinträgen verglichen. Anschließend wird über die der symbolische Anwendungsadressnummer Ax zugeordnete erste Secure-Shell-Kommunikationsportnummer SP1 über die zweite Proxy-Server-Einheit 7.2 der Verbindungsaufbau über die Secure-Shell-Tunnelverbindung 11 zur zweiten Secure-Shell-Kommunikationsportnummer SP2 fortgesetzt. Über die zweite Secure-Shell-Kommunikationsportnummer SP2 ist die in der zweiten Steuereinheit 14 der netzinternen Vermittlungseinheit 3.2* ausgeführte SSH-Client-Anwendung 15 ansprechbar.

Anhand der in der zweiten Steuereinheit 14 der vierten Kommunikationseinrichtung 5.24 ausgeführten SSH-Client-Anwendung 15 werden durch Auswertung der in der Speichereinheit 17 hinterlegten Verbindungsdaten 20, welche nach dem Aufbau der Secure-Shell-Tunnelverbindung 11 von der zweiten Vermittlungsstelle 3.2 zur netzinternen Vermittlungsstelle 3.2* übertragen wurden, eine Verbindung zu der in der dritten Steuereinheit 19 der zweiten Kommunikationseinrichtung 5.22 ausgeführten Kommunikationsanwendung 16 hergestellt.

Als kundenseitige Kommunikationsanwendung 16 sind zur Realisierung des Client-Server-Prinzips geeignete Kommunikationsanwendungen wie beispielsweise eine "Telnet-Daemon-Anwendung" oder "PC-Anyware-Host-Anwendung" vorgesehen, welche über die erste und zweite Proxy-Server-Einheit 7.1, 7.2 mit der in der ersten Kommunikationseinrichtung 5.11 vorgesehenen "Telnet-Client-Anwendung" bzw. "PC-Anywhere-Client-Anwendung" kommunizieren. Durch den Einsatz des abhörsicheren Secure-Shell-Tunnelverbindung 11 und durch die in Proxy-Server-Einheiten 7.1, 7.2, 7.3 durch die symbolischen Adressindikators 9 hinterlegten Navigationsinformationen können sämtliche Client-Server-Kommunikationsanwendungen 16 eingesetzt werden, bei denen die Datenübertragung über eine Transmission Control Protocoll (TCP)-Datenverbindung erfolgt.

Über die in der ersten Kommunikationseinrichtung 5.11 des ersten Kommunikationsnetzwerks 2.1 des Servicedienstleisters gestartete Client-Kommunikationsanwendung und die direkte, netzübergreifende und abhörsichere Kommunikationsverbindung 8 zu dem in der zweiten Kommunikationseinrichtung 5.22 des zweiten Kommunikationsnetzwerks 2.2 ausgeführte Server-Kommunikationsanwendung wird somit eine netzübergreifende Wartung eines Kundensystems direkt vom Arbeitsplatz eines Servicemitarbeiters aus einem Servicenetzwerk möglich, ohne hierdurch die üblichen Sicherheitsmaßnahmen der topologisch voneinander getrennten Kommunikationsnetzwerke 2.1, 2.2 reduzieren zu müssen.

Darüber hinaus können zur Realisierung an sich bekannter Redundanzkonzepte die erste bis dritte Vermittlungseinheit 3.1, 3.2, 3.3 jeweils mehrfach vorgesehen sein, welche jeweils über eine weitere über eine unterschiedliche Verbindungsstrecke durch das öffentliche Kommunikationsnetzwerk 4 geführte Virtual-Private-Network (VPN) Tunnelverbindung (nicht in den Figuren dargestellt) zum Aufbau einer direkten, netzübergreifenden und abhörsicheren Kommunikationsverbindung 8 miteinander verbunden werden.

Vorteilhaft ist bei Änderung oder Erweiterung der zu wartenden Kommunikationseinrichtungen 5.x keine Anpassung der auf einer Boot-CD gespeicherten SSH-Client-Anwendung 15 und/oder der Vermittlungsdaten 18 erforderlich, da die für den Verbindungsaufbau maßgeblichen Verbindungsdaten 20 nach Aufbau der Secure-Shell-Tunnel-Verbindung 11 von der zweiten bzw. dritten Vermittlungseinheit 3.2, 3.3 geladen werden.

In einer weiteren vorteilhaften Ausbildung können die einzelnen zum Aufbau der Secure-Shell-Tunnelverbindung 11 erforderlichen Verfahrensschritte auf dem CD-Cover der auf einer bootfähigen CD gespeicherten SSH-Client-Anwendung 15 als eine Art "Bedienungsanleitung" abgedruckt sein.

Die Erfindung wurde voranstehend anhand eines Ausführungsbeispiels näher beschrieben. Es versteht sich von selbst, daß zahlreiche Modifikationen sowie Abwandlungen möglich sind, ohne daß dadurch der der Erfindung zugrunde liegende Erfindungsgedanke verlassen wird. Insbesondere kann die als netzinterne Vermittlungseinheit 3.2* konfigurierte Kommunikationseinrichtung 5.24 im jeweiligen Kommunikationsnetzwerk 2.2, 2.3 zusätzlich für weitere Anwendungen benutzt werden. Auch ist der Einsatz einer mobilen Kommunikationseinrichtung, beispielsweise eines Laptops als netzinterne Vermittlungseinheit 3.2* möglich.

## Patentansprüche

1. Verfahren zum Aufbau zumindest einer direkten, netzübergreifenden und abhörsicheren Kommunikationsverbindung (8) zwischen einer ersten Kommunikationseinrichtung (5.11) eines ersten Kommunikationsnetzwerks (2.1) und zumindest einer zweiten Kommunikationseinrichtung (5.22) eines zweiten Kommunikationsnetzwerks (2.2) über zumindest eine erste mit dem ersten Kommunikationsnetzwerk (2.1) verbundene Vermittlungseinheit (3.1), eine zweite mit dem zweiten Kommunikationsnetzwerk (2.2) verbundene Vermittlungseinheit (3.2) und eine im zweiten Kommunikationsnetzwerk (2.2) vorgesehene und mit der zumindest einen zweiten Kommunikationseinrichtung (5.22) verbindbaren netzinternen Vermittlungseinheit (3.2*),
- bei dem vor dem Aufbau der Kommunikationsverbindung (8) zumindest eine weitere im zweiten Kommunikationsnetzwerk (2.2) vorgesehene Kommunikationseinrichtung (5.24) mit Hilfe einer bootfähigen Secure-Shell-Client-Anwendung (15) als netzinterne Vermittlungseinheit (3.2*) konfiguriert wird,
- bei dem von der netzinternen Vermittlungseinheit (3.2*) durch die Secure-Shell-Client-Anwendung (15) aus dem zweiten Kommunikationsnetzwerk (2.2) eine Secure-Shell-Tunnel-Verbindung (11) zur zweiten Vermittlungseinheit (3.2) aufgebaut wird, und
- bei dem ausgehend von der ersten Kommunikationseinrichtung (5.11) über die erste und zweite Vermittlungseinheit (3.1, 3.2), die Secure-Shell-Tunnel-Verbindung (11) und die netzinterne Vermittlungseinheit (3.2*) zur zweiten Kommunikationseinrichtung (5.22) eine direkte, netzübergreifende und abhörsichere Kommunikationsverbindung (8) aufgebaut wird.

2. Verfahren nach Anspruch 1, bei dem die bootfähige Secure-Shell-Client-Anwendung (15) die zum Aufbau der Secure-Shell-Tunnel-Verbindung (11) erforderlichen Vermittlungsdaten (18) von einem Speichermedium (17) ausliest und abhängig von den Vermittlungsdaten (18) die Secure-Shell-Tunnel-Verbindung (11) aufbaut.

3. Verfahren nach Anspruch 2, bei dem als Vermittlungsdaten (18) zumindest die einer Secure-Shell-Server-Anwendung (13) zugeordnete erste Secure-Shell-Kommunikationsportnummer (SP1), die netzinterne Vermittlungsadressnummer (Vx*) der zweiten Vermittlungseinheit (3.2, 3.3) und die der Secure-Shell-Client-Anwendung (15) zugeordnete zweite Secure-Shell-Kommunikationsportnummer (SP2) der als netzinterne Vermittlungseinheit (3.2*) konfiguriert Kommunikationseinrichtung (5.24) ausgelesen werden.

4. Verfahren nach einem der Ansprüche 1 bis 3, bei dem nach dem erfolgreichen Aufbau der Secure-Shell-Tunnelverbindung (11) sämtliche für den Verbindungsaufbau zur zweiten Kommunikationseinrichtung (5.22) erforderlichen Verbindungsdaten (20) von der zweiten Vermittlungsstelle (3.2) an die netzinterne Vermittlungsstelle (3.2*) übertragen werden.

5. Verfahren nach einem der Ansprüche 1 bis 4, bei dem zumindest der zweiten Vermittlungseinheit (3.2), der zweiten Kommunikationseinrichtung (5.22) sowie zumindest einer in der zweiten Kommunikationseinrichtung vorgesehenen Kommunikationsanwendung bezüglich des ersten Kommunikationsnetzwerks (3.1) eindeutige symbolische Adressnummern (Vx, Sx, Ax) zugeordnet werden.

6. Verfahren nach Anspruch 5, bei dem ein symbolischer Adressindikator (9) zumindest teilweise aus den symbolischen Adressnummern (Vx, Sx, Ax) der zum Aufbau der Kommunikationsverbindung (8) vorgesehenen zweiten Vermittlungsstelle (3.2), zumindest einer zweiten Kommunikationseinrichtung (5.22) sowie zumindest einer der auf der genannten zweiten Kommunikationseinrichtung (5.22) vorgesehenen Kommunikationsanwendung (16) gebildet wird.

7. Verfahren nach Anspruch 6, bei dem den bezüglich des ersten Kommunikationsnetzwerks (2.1) eindeutigen symbolischen Adressnummern (Vx, Sx, Ax) anhand von in der ersten und zweiten Vermittlungseinheit (3.1, 3.2) und den Kommunikationseinrichtungen (5.21, 5.22, 5.23, 5.24, 5.31, 5.32) der zweiten Kommunikationsnetzwerke (3.2, 3.3) hinterlegten Datensätzen bezüglich des jeweiligen zweiten Kommunikationsnetzwerks (3.2, 3.3) eindeutige netzinterne Adressnummern (Vx*, Sx*, Ax*) zugeordnet werden.

8. Verfahren nach einem der Ansprüche 5 bis 7, bei dem innerhalb des symbolischen Adressindikators (9) zumindest eine erste bis dritte Adresskomponente (9.1 bis 9.3) gebildet wird, wobei die erste Adresskomponente (9.1) eine symbolische Vermittlungsadressnummer (Vx), die zweite Adresskomponente (9.2) eine symbolische Systemadressnummer (Sx) und die dritte Adresskomponente (9.3) eine symbolische Anwendungsadressnummer (Ax) enthält.

9. Verfahren nach einem der vorhergehenden Ansprüche, bei dem der symbolische Adressindikator (9) vor dem Aufbau der direkten, netzübergreifenden Kommunikationsverbindung (8) im ersten Kommunikationsnetzwerk (3.1) erzeugt wird.

10. Verfahren nach Anspruch 9, bei dem der symbolische Adressindikator (9) in der ersten Kommunikationseinrichtung (5.11) erzeugt, an die erste Vermittlungseinheit (3.1) übermittelt und in der ersten Vermittlungseinheit (3.1) gespeichert wird.

11. Verfahren nach einem der Ansprüche 9 oder 10, bei dem der Aufbau der Kommunikationsverbindung (8) über eine in der ersten Kommunikationseinrichtung (5.11) ausgeführte erste Kommunikationsanwendung initiiert wird.

12. Verfahren nach einem der Ansprüche 9 bis 11, bei dem durch die Kommunikationsanwendung eine Verbindungsanforderung mit zumindest einer die erste Kommunikationseinrichtung (5.11) identifizierenden Kennung (IP_{5.11}) von der ersten Kommunikationseinrichtung (5.11) an die erste Vermittlungseinheit (3.1) übermittelt wird und in der ersten Vermittlungseinheit (3.1) anhand der mit der Verbindungsanforderung übermittelten Kennung (IP_{5.11}) der zugehörige symbolische Adressindikator (9) ermittelt wird.

13. Verfahren nach Anspruch 12, bei dem in der ersten Vermittlungseinheit (3.1) anhand der ersten symbolischen Adresskomponente (9.1) des symbolischen Adressindikators (9) die zum Aufbau der Kommunikationsverbindung (8) bestimmte symbolische Vermittlungsadressnummer (Vx) der zweiten Vermittlungsstelle (3.2) ermittelt wird, eine Verbindung zu der ermittelten zweiten Vermittlungseinheit (3.2) über ein drittes Kommunikationsnetzwerk (4) aufgebaut und der symbolische Adressindikator (9) zumindest teilweise an die ermittelte zweite Vermittlungseinheit (3.2) übertragen wird.

14. Verfahren nach Anspruch 13, bei dem in der zweiten Vermittlungseinheit (3.2) anhand der symbolischen Systemadressnummer (Sx) des symbolischen Adressindikators (9) über die in der zweiten Vermittlungseinheit (3.2) hinterlegten Verbindungsdaten (20) die zugeordnete erste Secure-Shell-Kommunikationsportnummer (SP1) der Secure-Shell- Tunnel-Verbindung (11) ermittelt wird und der Verbindungsaufbau über die Secure-Shell-Tunnel-Verbindung (11) und die netzinterne Vermittlungseinheit (3.2*) zu der zweiten Kommunikationseinrichtung (5.22) des zweiten Kommunikationsnetzwerks (2.2) fortgesetzt wird.

15. Verfahren nach einem der vorhergehenden Ansprüche, bei dem zwischen der ersten und zweiten Vermittlungseinheit (3.1, 3.2) zumindest eine Virtual Private Network (VPN)Tunnelverbindung (10) aufgebaut wird.

16. Verfahren nach einem der vorhergehenden Ansprüche, bei dem die Vermittlungseinheiten (3.1, 3.2, 3.3) jeweils über eine Application-Level-Firewall- (ALF) -Einheit realisiert werden, die jeweils zumindest eine Proxy-Server-Einheit (7.1, 7.2, 7.3) aufweisen.

17. Verfahren nach einem der Ansprüche 12 bis 16, bei dem die die erste Kommunikationseinrichtung (5.11) identifizierende Kennung (IP_{5.11}) zumindest teilweise aus der Internet-Protokoll-Adresse der ersten Kommunikationseinrichtung (5.11) gebildet wird.

18. Verfahren nach einem der Ansprüche 11 bis 17, bei dem als Kommunikationsanwendungen (16) in der ersten bzw. zweiten Kommunikationseinrichtung (5.11, 5.22) Client- bzw. Serwer-Kommunikationsanwendungen (16) ausgeführt werden, bei denen die Datenübertragung über eine Transmission Control Protocoll (TCP) -Datenverbindung erfolgt.

## Claims

1. Method for setting up at least one direct, cross-network and secure communication link (8) between a first communication device (5.11) in a first communication network (2.1) and at least one second communication device (5.22) in a second communication network (2.2) via at least a first switching unit (3.1) connected to the first communication network (2.1), a second switching unit (3.2) connected to the second communication network (2.2) and a network-internal switching unit (3.2*) which is provided in the second communication network (2.2) and which can be connected to the at least one second communication device (5.22),
- in which the setup of the communication link (8) is preceded by the configuration of at least one further communication device (5.24) provided in the second communication network (2.2) using a bootable secure shell client application (15) as network-internal switching unit (3.2*),
- in which the network-internal switching unit (3.2*) uses the secure shell client application (15) to set up a secure shell tunnel connection (11) from the second communication network (2.2) to the second switching unit (3.2), and
- in which the first communication device (5.11) uses the first and second switching units (3.1, 3.2), the secure shell tunnel connection (11) and the network-internal switching unit (3.2*) to set up a direct, cross-network and secure communication link (8) to the second communication device (5.22).

2. The method according to Claim 1, in which the bootable secure shell client application (15) reads the switching data (18) which are required for setting up the secure shell tunnel connection (11) from a storage medium (17) and takes the switching data (18) as a basis for setting up the secure shell tunnel connection (11).

3. The method according to Claim 2, in which the switching data (18) read are at least the first secure shell communication port number (SP1) associated with a secure shell server application (13), the network-internal switching address number (Vx*) of the second switching unit (3.2, 3.3) and the second secure shell communication port number (SP2) of the communication device (5.24) configured as a network-internal switching unit (3.2*), which second secure shell communication port number (SP2) is associated with the secure shell client application (15).

4. The method according to one of Claims 1 to 3, in which successful setup of the secure shell tunnel connection (11) is followed by all the connection data (20) which are required for setting up the connection to the second communication device (5.22) being transmitted from the second switching centre (3.2) to the network-internal switching centre (3.2*).

5. The method according to one of Claims 1 to 4, in which at least the second switching unit (3.2), the second communication device (5.22) and at least one communication application provided in the second communication device for the first communication network (3.1) are allocated explicit symbolic address numbers (Vx, Sx, Ax).

6. The method according to Claim 5, in which a symbolic address indicator (9) is formed at least to some extent from the symbolic address numbers (Vx, Sx, Ax) of the second switching centre (3.2) provided for the purpose of setting up the communication link (8), of at least one second communication device (5.22) and of at least one communication application (16) provided on said second communication device (5.22).

7. The method according to Claim 6, in which the symbolic address numbers (Vx, Sx, Ax) which are explicit for the first communication network (2.1) are allocated explicit network-internal address numbers (Vx*, Sx*, Ax*) using data records for the respective second communication network (3.2, 3.3) which are stored in the first and second switching units (3.1, 3.2) and the communication devices (5.21, 5.22, 5.23, 5.24, 5.31, 5.32) in the second communication networks (3.2, 3.3).

8. The method according to one of Claims 5 to 7, in which at least one first to third address component (9.1 to 9.3) is formed within the symbolic address indicator (9), wherein the first address component (9.1) contains a symbolic switching address number (Vx), the second address component (9.2) contains a symbolic system address number (Sx) and the third address component (9.3) contains a symbolic application address number (Ax).

9. The method according to one of the preceding claims, in which the symbolic address indicator (9) is produced in the first communication network (3.1) before the direct, cross-network communication link (8) is set up.

10. The method according to Claim 9, in which the symbolic address indicator (9) is produced in the first communication device (5.11), is transmitted to the first switching unit (3.1) and is stored in the first switching unit (3.1).

11. The method according to one of Claims 9 and 10, in which the setup of the communication link (8) is initiated by means of a first communication application which is executed in the first communication device (5.11).

12. The method according to one of Claims 9 to 11, in which the communication application transmits a connection request with at least one identifier (IP_{5.11}) identifying the first communication device (5.11) from the first communication device (5.11) to the first switching unit (3.1), and the first switching unit (3.1) uses the identifier (IP_{5.11}) transmitted with the connection request to ascertain the associated symbolic address indicator (9).

13. The method according to Claim 12, in which the first switching unit (3.1) uses the first symbolic address component (9.1) of the symbolic address indicator (9) to ascertain that symbolic switching address number (Vx) of the second switching centre (3.2) which is intended for setting up the communication link (8), sets up a connection to the ascertained second switching unit (3.2) via a third communication network (4) and transmits the symbolic address indicator (9) at least to some extent to the ascertained second switching unit (3.2).

14. The method according to Claim 13, in which the second switching unit (3.2) uses the symbolic system address number (Sx) of the symbolic address indicator (9) relating to the connection data (20) stored in the second switching unit (3.2) to ascertain the associated first secure shell communication port number (SP1) of the secure shell tunnel connection (11) and continues the connection setup via the secure shell tunnel connection (11) and the network-internal switching unit (3.2*) to the second communication device (5.22) in the second communication network (2.2).

15. The method according to one of the preceding claims, in which at least one virtual private network (VPN) tunnel connection (10) is set up between the first and second switching unit (3.1, 3.2).

16. The method according to one of the preceding claims, in which the switching units (3.1, 3.2, 3.3) are implemented using a respective application level firewall (ALF) unit, each of which has at least one proxy server unit (7.1, 7.2, 7.3).

17. The method according to one of Claims 12 to 16, in which the identifier (IP_{5.11}) identifying the first communication device (5.11) is formed at least to some extent from the Internet protocol address of the first communication device (5.11) .

18. The method according to one of Claims 11 to 17, in which the communication applications (16) executed in the first or second communication device (5.11, 5.22) are client or server communication applications (16) which involve the data transmission being effected using a transmission control protocol (TCP) data connection.

## Revendications

1. Procédé pour la mise en place d'au moins une liaison de communication (8) directe, couvrant les réseaux et anti-écoute entre un premier dispositif de communication (5.11) d'un premier réseau de communication (2.1) et au moins un second dispositif de communication (5.22) d'un second réseau de communication (2.2) au moyen d'au moins une première unité de commutation (3.1) reliée au premier réseau de communication (2.1), d'une seconde unité de commutation (3.2) reliée au second réseau de communication (2.2) et d'une unité de commutation (3.2*) interne au réseau, prévue dans le second réseau de communication (2.2) et pouvant être reliée au au moins un second dispositif de communication (5.22),
- dans lequel, avant l'établissement de la liaison de communication (8), au moins un autre dispositif de communication (5.24) prévu dans le second réseau de communication (2.2) est configuré à l'aide d'une application client Secure Shell (15) bootable comme unité de commutation (3.2*) interne au réseau,
- dans lequel l'unité de commutation (3.2*) interne au réseau établit par l'application client Secure Shell (15) à partir du second réseau de communication (2.2) une connexion tunnel Secure Shell (11) avec la seconde unité de commutation (3.2), et
- dans lequel, à partir du premier dispositif de communication (5.11), une liaison de communication (8) directe, couvrant les réseaux et anti-écoute est établie avec le second dispositif de communication (5.22) par l'intermédiaire de la première et de la seconde unité de commutation (3.1, 3.2), de la connexion tunnel Secure Shell (11) et de l'unité de commutation (3.2*) interne au réseau.

2. Procédé selon la revendication 1, dans lequel l'application client Secure Shell (15) bootable lit les données de commutation (18) nécessaires pour l'établissement de la connexion tunnel Secure Shell (11) à partir d'un support de stockage (17) et établit la connexion tunnel Secure Shell (11) en fonction des données de commutation (18).

3. Procédé selon la revendication 2, dans lequel, comme données de commutation (18), on lit au moins le premier numéro de port de communication Secure Shell (SP1), attribué à une application de serveur Secure Shell (13), le numéro d'adresse de commutation (Vx*) interne au réseau de la seconde unité de commutation (3.2, 3.3) et le second numéro de port de communication Secure Shell (SP2), attribué à l'application client Secure Shell (15), du dispositif de communication (5.24) configuré comme unité de commutation (3.2*) interne au réseau.

4. Procédé selon l'une quelconque des revendications 1 à 3, dans lequel après l'établissement réussi de la connexion tunnel Secure Shell (11), toutes les données de liaison (20) nécessaires pour l'établissement de la liaison avec le second dispositif de communication (5.22) sont transmises du second point de commutation (3.2) au point de commutation (3.2*) interne au réseau.

5. Procédé selon l'une quelconque des revendications 1 à 4, dans lequel des numéros d'adresse (Vx, Sx, Ax) symboliques, uniques par rapport au premier réseau de communication (3.1) sont attribués au moins à la seconde unité de commutation (3.2), au second dispositif de communication (5.22) et au moins à une application de communication prévue dans le second dispositif de communication.

6. Procédé selon la revendication 5, dans lequel un indicateur d'adresse (9) symbolique est formé au moins en partie à partir des numéros d'adresse (Vx, Sx, Ax) symboliques du second point de commutation (3.2) prévu pour l'établissement de la liaison de communication (8), d'au moins un second dispositif de communication (5.22) et d'au moins une application de communication (16) prévue sur ledit second dispositif de communication (5.22).

7. Procédé selon la revendication 6, dans lequel des numéros d'adresse (Vx*, Sx*, Ax*) internes au réseau, uniques par rapport au second réseau de communication (3.2, 3.3) respectif sont attribués aux numéros d'adresse (Vx, Sx, Ax) symboliques, uniques par rapport au premier réseau de communication (2.1) à l'aide d'ensembles de données déposés dans la première et la seconde unité de commutation (3.1, 3.2) et les dispositifs de communication (5.21, 5.22, 5.23, 5.24, 5.31, 5.32) des seconds réseaux de communication (3.2, 3.3).

8. Procédé selon l'une quelconque des revendications 5 à 7, dans lequel au moins un premier jusqu'à un troisième composant d'adresse (9.1 à 9.3) est formé à l'intérieur de l'indicateur d'adresse (9) symbolique, le premier composant d'adresse (9.1) contenant un numéro d'adresse de commutation (Vx) symbolique, le second composant d'adresse (9.2) contenant un numéro d'adresse de système (Sx) symbolique et le troisième composant d'adresse (9.3) contenant un numéro d'adresse d'application (Ax) symbolique.

9. Procédé selon l'une quelconque des revendications précédentes, dans lequel l'indicateur d'adresse (9) symbolique est généré avant l'établissement de la liaison de communication (8) directe et couvrant les réseaux dans le premier réseau de communication (3.1).

10. Procédé selon la revendication 9, dans lequel l'indicateur d'adresse (9) symbolique est généré dans le premier dispositif de communication (5.11), est transmis à la première unité de commutation (3.1) et est stocké dans la première unité de commutation (3.1).

11. Procédé selon l'une quelconque des revendications 9 ou 10, dans lequel l'établissement de la liaison de communication (8) est initié au moyen d'une première application de communication, réalisée dans le premier dispositif de communication (5.11).

12. Procédé selon l'une quelconque des revendications 9 à 11, dans lequel une demande de liaison avec au moins un code (IP_{5.11}) identifiant le premier dispositif de communication (5.11) est transmise par l'application de communication du premier dispositif de communication (5.11) à la première unité de commutation (3.1) et l'indicateur d'adresse (9) symbolique spécifique est déterminé dans la première unité de commutation (3.1) à l'aide du code (IP_{5.11}) transmis avec la demande de liaison.

13. Procédé selon la revendication 12, dans lequel le numéro d'adresse de commutation symbolique (Vx), déterminé pour l'établissement de la liaison de communication (8), du second point de commutation (3.2) est déterminé dans la première unité de commutation (3.1) à l'aide du premier composant d_{'}adresse (9.1) symbolique de l'indicateur d'adresse (9) symbolique, une liaison est établie avec la seconde unité de commutation (3.2) déterminée au moyen d'un troisième réseau de communication (4) et l'indicateur d'adresse (9) symbolique est transmis au moins partiellement à la seconde unité de commutation (3.2) déterminée.

14. Procédé selon la revendication 13, dans lequel le premier numéro de port de communication Secure Shell (SP1) attribué de la connexion tunnel Secure Shell (11) est déterminé dans la seconde unité de commutation (3.2) à l'aide du numéro d'adresse de système (Sx) symbolique de l'indicateur d'adresse (9) symbolique par le biais des données de liaison (20) déposées dans la seconde unité de commutation (3.2) et l'établissement de liaison est poursuivi par l'intermédiaire de la connexion tunnel Secure Shell (11) et de l'unité de commutation (3.2*) interne au réseau avec le second dispositif de communication (5.22) du second réseau de communication (2.2).

15. Procédé selon l'une quelconque des revendications précédentes, dans lequel au moins une connexion tunnel (10) Virtual Private Network (VPN) est établie entre la première unité de commutation et la seconde unité de commutation (3.1, 3.2).

16. Procédé selon l'une quelconque des revendications précédentes, dans lequel les unités de commutation (3.1, 3.2, 3.3) sont réalisées respectivement par le biais d'une unité Application-Level-Firewall (ALF), lesquelles présentent chacune au moins une unité de serveur mandataire (7.1, 7.2, 7.3).

17. Procédé selon l'une quelconque des revendications 12 à 16, dans lequel le code (IP_{5.11}) identifiant le premier dispositif de communication (5.11) est formé au moins partiellement à partir de l'adresse de protocole Internet du premier dispositif de communication (5.11).

18. Procédé selon l'une quelconque des revendications 11 à 17, dans lequel des applications de communication client et serveur (16) sont mises en oeuvre comme applications de communication (16) dans le premier et le second dispositif de communication (5.11, 5.22), applications dans lesquelles la transmission de données s'effectue au moyen d'une liaison de données Transmission Control Protocoll (TCP).
